# EUROPEAN PATENT APPLICATION

(11) **EP 1 890 307 A1**
(43) Date of publication of application: **20.02.2008**
(21) Application number: 06757373.3
(22) Date of filing: 09.06.2006
(51) Int. Cl.: H01G 9/038, H01G 9/058

(54) **ELECTRODE FOR ELECTRIC DOUBLE LAYER CAPACITOR AND ELECTRIC DOUBLE LAYER CAPACITOR**

(30) Priority: 10.06.2005 JP 2005171537
(71) Applicant: JAPAN GORE-TEX, INC., Setagaya-ku Tokyo 156-8505 (JP)
(72) Inventor: NORIEDA, Hiroyuki, Japan Gore-Tex Inc., Tokyo 156-8505 (JP); KOBAYASHI, Kotaro, Japan Gore-Tex Inc., Tokyo 156-8505 (JP)
(74) Representative: Shanks, Andrew
(86) International application number: PCT/JP2006/312084
(87) International publication number: WO 2006/132444

(57) **Abstract**

Disclosed is an electric double layer capacitor that comprises: a polarizable electrode containing a carbon material having graphite-like microcrystalline carbon; and an electrolyte containing a spiro compound represented by the general formula 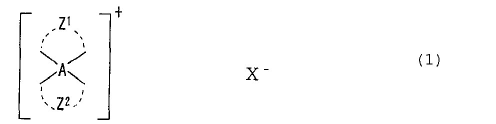 (where A represents a spiro atom having an sp³ hybrid orbital, Z¹ and Z² each represent a group of atoms forming a saturated ring or unsaturated ring in which the number of ring atoms including A is four or more, and X⁻ represents a counter-anion). According to the present invention, an electric field activation type electric double layer capacitor can be obtained that simultaneously achieves improved volumetric capacitance density, improved resistance, and improved withstand voltage.

## Description

### TECHNICAL FIELD

The present invention relates to an electrode for an electric double layer capacitor and an electric double layer capacitor.

### BACKGROUND ART

In recent years, electric double layer capacitors capable of charging and discharging with a large current have been attracting attention as a type of electric power storage device for applications requiring frequent charge/discharge cycles, for example, as auxiliary power supplies for electric vehicles, solar cells, wind power generation, etc. There is therefore a need for an electric double layer capacitor that has a high energy density, is capable of fast charging and discharging, and yet has excellent durability.

An electric double layer capacitor comprises a pair of polarizable electrodes as an anode and cathode disposed opposite each other with a separator interposed therebetween. Each polarizable electrode is impregnated with an aqueous or non-aqueous electrolytic solution, and is united with a current collector. With the aqueous type electrolytic solution, the volumetric capacitance density can be increased to reduce resistance, but the operating voltage must be made lower than the voltage at which the electrolysis of water takes place. Therefore, from the standpoint of increasing the energy density, a non-aqueous type is preferable.

A carbon material having graphite-like microcrystalline carbon (hereinafter referred to as "graphite-like carbon material) is known for use as a polarizable electrode material for electric double layer capacitors (Japanese Unexamined Patent Publication Nos. H11-317333, 2000-077273, 2000-068164, 2000-068165, and 2000-100668). This carbon material is prepared by controlling the activation process of the raw material so that the crystallite interlayer spacing (d₀₀₂) of the graphite-like microcrystalline carbon lies within a range of 0.365 to 0.385 nm. A microcrystalline carbon having such specific interlayer spacing exhibits a property that when a voltage higher than the usual operating voltage (rated voltage) is applied to it in an electrolytic solution, electrical activation (electric field activation) occurs with electrolyte ions inserted between the carbon crystal layers, thus producing a high capacitance (electric field activation type capacitor). Once the ions are inserted and fine pores are formed, the graphite-like carbon material maintains high capacitance even when it is repeatedly used at the rated voltage. Compared with activated carbon commonly used as a carbon material for electric double layer capacitors, a graphite-like carbon material can withstand a higher voltage and permits energy density to be increased significantly, and therefore, this carbon material has been attracting attention as a material that can replace activated carbon.

In the prior art, tetraalkyl quaternary ammonium salts such as tetraethylammonium salts or asymmetric triethylmethylammonium salts or the like have been used as electrolytes for electric field activation type capacitors, because such electrolytes provide a wide potential window and are therefore suitable for electric field activation type capacitors to which a high voltage is applied (Japanese Unexamined Patent Publication NO. 2000-077273). However, such electrolytes are difficult to insert into the extremely small interlayer spacing of a graphite-like carbon material, the spacing being as small as 0.365 to 0.385 nm, and as a result, it has not been possible to fully exploit the electrode performance of graphite-like carbon material in terms of capacitance, DC internal resistance, etc.

Since an electric field activation type capacitor, unlike the conventional activated carbon type, can fully function as a capacitor only after fine pores are formed by the insertion of electrolyte ions, the characteristic of the electrolyte ions at the time of the electric field activation, in particular, its structure, greatly affects the capacitor performance. Noting such structural aspects of the electrolyte ions, it has been proposed to use an imidazolium salt having a planar molecular structure as an electrolyte for the electric field activation type capacitor (Japanese Unexamined Patent Publication NO. 2004-289130). Since such an electrolyte can be easily inserted into the interlayer spacing of the microcrystalline carbon, the capacitance of the resulting capacitor and the initial value of its DC internal resistance can be improved. However, the proposed imidazolium salt-based electrolyte has a narrower potential window than that of tetraalkyl quaternary ammonium salts, and the electrolyte itself decomposes when a high voltage is applied, therefore, the capacitor cannot be used at a high rated voltage at which the electrode performance of the graphite-like carbon material can be fully exploited.

It is known to form an electrolytic solution for an activated carbon type capacitor by using a 1,1'-spirobipyrrolidinium compound salt as the electrolyte (Chiba et al., Lecture Notes at the 72nd Convention of the Electrochemical Society of Japan, p. 242, 2005). It is reported that the 1,1'-spirobipyrrolidinium compound salt-based electrolyte, which is highly soluble in solvents, not only achieves higher conductivity than conventional quaternary ammonium salt-based electrolytes, but also is stable thermally and electrically. However, no such spiro compound salt-based electrolytes have ever been used for electric field activation type capacitors. In such spiro compounds, since the spiro atom has an sp³ hybrid orbital, the two rings do not lie in the same plane, and the molecule as a whole becomes bulky, which runs counter to the prior art teaching (Japanese Unexamined Patent Publication NO. 2004-289130) that if the electrolyte is to be inserted into the extremely small interlayer spacing of the graphite-like carbon material, it is preferable that the electrolyte exhibits a planar molecular structure and also that its substituent alkyl group is not bulky.

### DISCLOSURE OF THE INVENTION

It is an object of the present invention to provide an electric field activation type capacitor that simultaneously achieves improved volumetric capacitance density (energy density), improved resistance, and improved withstand voltage by suitably selecting an electrolyte, thereby making it possible to fully exploit the electrode performance of the graphite-like carbon material.

According to the present invention, there is provided (1) an electric double layer capacitor comprising: a polarizable electrode containing a carbon material having graphite-like microcrystalline carbon; and an electrolyte containing a spiro compound represented by the general formula 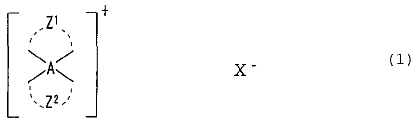 (where A represents a spiro atom having an sp³ hybrid orbital, Z¹ and Z² each represent a group of atoms forming a saturated ring or unsaturated ring in which the number of ring atoms including A is four or more, and X⁻ represents a counter-anion).

According to the present invention, there is also provided (2) an electric double layer capacitor as described in item (1), wherein the spiro atom carries a positive charge in the electrolyte.

According to the present invention, there is also provided (3) an electric double layer capacitor as described in item (2), wherein the spiro atom is nitrogen.

According to the present invention, there is also provided (4) an electric double layer capacitor as described in any one of items (1) to (3), wherein the number of ring atoms is the same for both Z¹ and Z².

According to the present invention, there is also provided (5) an electric double layer capacitor as described in item (4), wherein the number of ring atoms is five in each of Z¹ and Z².

According to the present invention, there is also provided (6) an electric double layer capacitor as described in item (4) or (5), wherein Z¹ and Z² have the same ring structure.

According to the present invention, there is also provided (7) an electric double layer capacitor as described in item (1), wherein the spiro compound is 1,1'-spirobipyrrolidinium.

According to the present invention, there is also provided (8) an electric double layer capacitor as described in any one of items (1) to (7), wherein the carbon material having graphite-like microcrystalline carbon has a specific surface area not larger than 800 m²/g as measured by a BET single-point method before charging, and an interlayer spacing d₀₀₂ lying within a range of 0.350 to 0.385 nm as measured by an X-ray diffraction method.

### BRIEF DESCRIPTION OF THE DRAWING

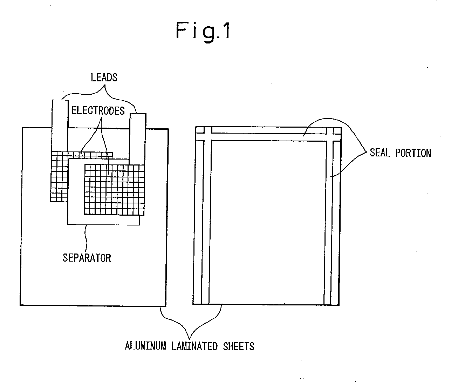

Figure 1 is a schematic diagram showing a method for fabricating a capacitor cell used in a working example.

### BEST MODE FOR CARRYING OUT THE INVENTION

An electric double layer capacitor according to the present invention comprises a polarizable electrode containing a carbon material having graphite-like microcrystalline carbon and an electrolyte containing a spiro compound represented by the earlier given general formula.

In the electrolyte according to the present invention, the two ring structures (Z¹ and Z²) are linked by a spiro atom having an sp³ hybrid orbital. Accordingly, the planes formed by the respective rings are twisted relative to each other by a certain angle, and the two ring structures do no lie in the same plane. According to the prior art teaching, if the electrolyte is to be effectively inserted into the interlayer spacing of the graphite-like carbon material, the electrolyte should exhibit a molecular structure in a manner that the atoms forming the electrolyte cations lie in the same plane (Japanese Unexamined Patent Publication NO. 2004-289130). Given the above teaching, one might predict that the spiro compound having the two ring structures that do not lie in the same plane would be difficult to insert into the interlayer spacing of the graphite-like carbon material. However, on the contrary, it has been found that the electrolyte containing the spiro compound according to the present invention can be inserted into the interlayer spacing of the graphite-like carbon material more effectively than the conventional electrolyte having a molecular structure in which the constituent atoms are arranged in the same plane. The present invention is not bound by any specific theory, but it is believed that, during the electric field activation of the electrolyte containing the spiro compound according to the present invention, one of the two ring structures is first inserted almost in parallel relative to the crystal plane of the graphite-like carbon material into the space between the crystal layers, thus enlarging the interlayer spacing of the graphite-like carbon material in the same manner as the conventional planar molecular structure, and subsequently, the other one of the two ring structures is inserted between the crystal layers at a certain angle (but not in parallel) with respect to the crystal plane of the graphite-like carbon material, forcing its way into the first enlarged interlayer spacing and eventually enlarging the spacing. In the case of a tetraalkyl quaternary ammonium salt that does not have a planar molecular structure, ions as a whole are relatively bulky, and the first insertion such as described above is difficult to occur. On the other hand, in the case of an imidazolium salt having a planar molecular structure only in a single plane, the subsequent forcible enlarging of the interlayer spacing does not occur. According to the present invention, since the subsequent forcible enlarging of the interlayer spacing not only serves to increase the specific surface area but also facilitates the movement of the electrolyte ions, the capacitor of the present invention can achieve a higher capacitance and a lower DC internal resistance than any electric field activation capacitor using the conventional electrolyte. Furthermore, since the electrolyte containing the spiro compound according to the present invention provides a wide potential window and can therefore be used at a high voltage comparable to that of a tetraalkyl quaternary ammonium salt, the energy density which is directly proportional to the square of the capacitance and voltage can be dramatically increased compared with the prior art.

The electrolyte containing the spiro compound according to the present invention is represented by the following general formula (1).

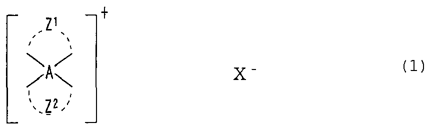

In the above formula, A represents the spiro atom having an sp³ hybrid orbital, and more specifically, the spiro atom is selected from the group consisting of nitrogen (N) and carbon (C). Preferably, the positive charge of the spiro compound molecule is localized on the spiro atom so that the effect of the solvation can be reduced by shielding the charge by the surrounding structures. Preferably the spiro atom is nitrogen, because its atomic radius is relatively small.

Z¹ and Z² each represent a group of atoms forming a saturated ring or unsaturated ring in which the number of ring atoms including A is four or more. Preferably, the two ring structures represented by Z¹ and Z² are similar to each other in terms of the kind and/or the number of ring atoms so that the ease with which the electrolyte is inserted into the crystal interlayer spacing of the graphite-like carbon material will not be easily affected by the molecular orientation; more preferably, both the kind and the number of ring atoms are the same between the two ring structures. The number of ring atoms is preferably five or more from the standpoint of synthesizing the spiro compound, five being the most preferable because the conductivity decreases if the number of atoms is six or more. The ring atoms may include nitrogen, sulfur, oxygen, etc. besides carbon. If the spiro atom does not carry a positive charge in the electrolyte, an atom that carries a positive charge, for example, quaternary nitrogen, must be included in the group of ring atoms other than the spiro atom. The electrolyte ion size is an important factor that affects the ease with which the electrolyte is inserted into the crystal interlayer spacing of the graphite-like carbon material. In particular, since the cation has a very large ion diameter compared with the anion whose van der Waals volume lies within the range of 0.01 to 0.06 nm³, reducing the ion diameter of the cation contributes to promoting the electric field activation. Accordingly, if the ring atoms in the spiro compound according to the present invention include a substituent group, it is preferable that the substituent group is as small as possible, and more preferably, they do not contain any substituent groups whatsoever.

X⁻ represents a counter-anion. For the counter-anion, BF₄⁻, PF₆⁻, AsF₆⁻, ClO₄⁻, CF₃SO₃⁻, (CF₃SO₂)₂N⁻, AlCl₄⁻, SbF₆⁻, etc. are preferred from the viewpoint of electrochemical stability and molecular ion diameter; among others, BF₄⁻ is particularly preferable.

Specific examples of electrolyte cations preferred for use in the present invention are given below.

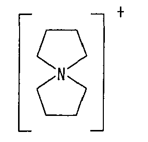

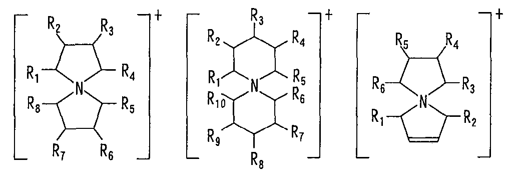

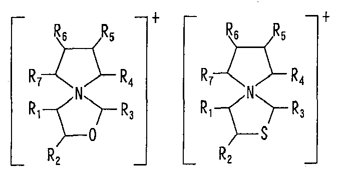

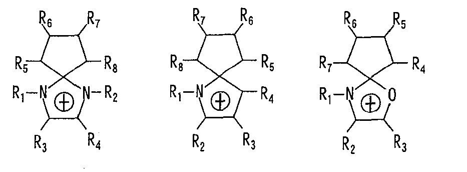

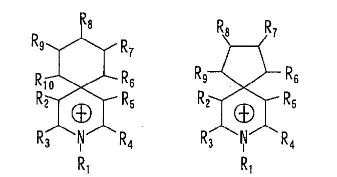

In the above formulas, R₁ to R₁₀ each represent hydrogen or an alkyl group having one to five carbon atoms.

The electrolyte according to the present invention may be used without dilution if it is a liquid at room temperature, but generally it is preferable to use it in the form of an electrolytic solution by dissolving it in an organic solvent. By using an organic solvent, the viscosity of the electrolytic solution can be reduced to suppress an increase in the DC internal resistance of the electrolyte. Examples of the organic solvent used here include propylene carbonate (PC), ethylene carbonate (EC), dimethyl carbonate (DMC), diethyl carbonate (DEC), dimethoxyethane, diethoxyethane, γ-butyrolactone (GBL), acetonitrile (AN), propionitrile, etc., from which a suitable one may be selected by considering such factors as the solubility of the electrolyte and the reactivity with the electrode. For example, when the electrolyte is a 1,1'-spirobipyrrolidinium compound, since its solubility in propylene carbonate is three or more times as high as that of a tetraethylammonium salt, higher conductivity can be achieved by increasing the electrolyte concentration. The above organic solvents may be used singly, or two or more kinds of solvents may be mixed together in a suitable combination. Since it is considered that the electrolyte ions to be inserted into the crystal interlayer spacing of the graphite-like carbon material during the electric field activation are solvated in the surrounding solvent, it is preferable to use a solvent having a small molecular volume. The electrolyte concentration in the electrolytic solution is preferably 0.5 mol/L or higher, and more preferably 1.0 mol/L or higher. The upper limit of the electrolyte concentration depends on the solubility determined by each specific combination of the electrolyte and organic solvent.

The graphite-like carbon material used for the polarizable electrodes of the electric double layer capacitor according to the present invention contains microcrystalline carbon. When the interlayer spacing d₀₀₂ of the microcrystalline carbon in the graphite-like carbon material (as measured by an X-ray diffraction method) lies within a specific range, i.e., the range of 0.350 to 0.385 nm, the electrolyte ions can be inserted into the crystal interlayer spacing of the microcrystalline carbon by applying a voltage higher than the rated voltage, and the material thus exhibits a high capacitance as a polarizable electrode. More preferably, the interlayer spacing d₀₀₂ is in the range of 0.355 to 0.370 nm, because then the increase of capacitance due to the interlayer insertion of the electrolyte ions becomes more pronounced. If the interlayer spacing d₀₀₂ is smaller than 0.350 nm, the interlayer insertion of the electrolyte ions becomes difficult to occur, and the rate of increase of capacitance decreases. Conversely, if the interlayer spacing d₀₀₂ is larger than 0.385 nm, the amount of functional groups existing on the surface of the graphite-like carbon material increases, and when voltage is applied, these functional groups decompose, significantly degrading the performance of the electric double layer capacitor, which is not desirable. The values of the interlayer spacing d₀₀₂ given here were obtained by measuring powder samples with Cu Kα radiation (target: Cu, excitation voltage: 30 kV) in the air atmosphere by using an X-ray diffractometer "RINT2000" manufactured by Rigaku Corporation.

The specific surface area of this graphite-like carbon material is preferably 800 m²/g or less, and more preferably 600 m²/g or less. If the specific surface area is larger than 800 m²/g, a sufficient capacitance can be obtained without relying on the electric field activation method. On the other hand, the amount of functional groups existing on the surface of the graphite-like carbon material increases, and when voltage is applied, these functional groups decompose, significantly degrading the performance of the electric double layer capacitor. The values of the specific surface area given here were obtained by a BET single-point method (drying temperature: 180°C, drying time: 1 hour) by using MONOSORB manufactured by Yuasa Ionics Co., Ltd.

A low-temperature calcined carbon material that is not well activated can be used as the graphite-like carbon material, and the material can be produced using various kinds of materials commonly used as materials for activated carbon, such as wood, coconut shells, pulp spent liquor, fossil fuels such as coal or petroleum heavy oil, coal or petroleum-based pitch or coke obtained by thermally cracking such fossil fuels, synthetic resins such as phenol resin, furan resin, polyvinyl chloride resin, polyvinylvinylidene chloride resin, etc. If the carbon material is classified between graphitizable carbon and non-graphitizable carbon, it is preferable from the standpoint of capacitance to use graphitizable carbon which contains a large amount of graphite-like microcrystalline carbon, while on the other hand, a carbon material produced by compositing graphitizable carbon and non-graphitizable carbon on a nanometer scale, for example, can also be used in order to suppress the expansion of the electrodes during the electric field activation (Yoshiharu Ikeda, Lecture Notes, Nikkei Automotive Technology Foundation Commemorative Seminar, May 21, 2004, Nikkei Electronics). Two or more kinds of carbon materials produced using different raw materials and different methods may be mixed in suitable proportions for balanced performance.

The graphite-like carbon material can be produced by heat-treating it in an inert atmosphere before activation and thereby preventing the activation from proceeding substantially, or by activating it only briefly. As for the heat treatment, it is preferable to calcine the material at relatively low temperatures of about 600 to 1000°C. For other graphite-like carbon materials advantageous for use in the present invention and the production methods thereof, refer to Japanese Unexamined Patent Publication Nos. H11-317333, 2000-077273, 2000-068164, 2000-068165, and 2000-100668.

The graphite-like carbon material is contained in each polarizable electrode in an amount ranging from 50% to 99% by mass, and more preferably from 65% to 85% by mass, with respect to the combined mass of the graphite-like carbon material and the binder and conductive agent described hereinafter. If the content of the graphite-like carbon material is smaller than 50% by mass, the energy density of the electrode decreases. Conversely, if the content exceeds 99% by mass, the amount of binder becomes insufficient, making it difficult to hold the carbon material within the electrode.

The electric double layer capacitor electrode contains a conductive agent for conferring electrical conductivity to the graphite-like carbon material. Carbon black such as Ketjen black or acetylene black, vapor growth carbon fiber, nanocarbon such as fullerene, carbon nanotube, or carbon nanohorn, or powdered or granular graphite or the like can be used as the conductive agent. The conductive agent should be added preferably in an amount ranging from 1% to 40% by mass, and more preferably in an amount ranging from 3% to 20% by mass, with respect to the combined mass of the conductive agent, the graphite-like carbon material, and the binder. If the amount of the conductive agent added is smaller than 1% by mass, the DC internal resistance of the electric double layer capacitor increases. Conversely, if the amount added exceeds 40% by mass, the energy density of the electrode decreases.

The electrode for an electric double layer capacitor contains a binder for binding the conductive agent to the graphite-like carbon material. A known material such as polytetrafluoroethylene (PTFE), polyvinylidene fluoride (PVDF), polyethylene (PE), polypropylene (PP), styrenebutadiene rubber (SBR), acrylonitrile-butadiene rubber (NBR), etc. can be used as the binder. The binder should be added preferably in an amount ranging from 1% to 30% by mass, and more preferably in an amount ranging from 3% to 20% by mass, with respect to the combined mass of the binder, the graphite-like carbon material, and the conductive agent. If the amount of the binder added is smaller than 1% by mass, it becomes difficult to hold the carbon material within the electrode. Conversely, if the amount added exceeds 30% by mass, the energy density of the electric double layer capacitor decreases, and the DC internal resistance increases.

The electric double layer capacitor electrode can be fabricated by a sheet forming method or coating method similar to that used for conventional activated carbon. For example, in the case of the sheet forming method, after the particle size of the graphite-like carbon material prepared by the earlier described method has been adjusted so that the mean particle size D50 falls within the range of about 5 to 200 µm, the conductive agent and the binder are added to the carbon material, and the mixture is kneaded and rolled-down into a sheet-like form. When kneading, various liquid agents such as water, ethanol, acetonitrile, etc. may be used singly or mixed together in a suitable combination. The thickness of the electric double layer capacitor electrode is preferably 50 to 500 µm, and more preferably 60 to 300 µm. If the thickness is smaller than 50 µm, the volume that the current collectors to be described later occupy in the capacitor cell increases, and the energy density decreases. Conversely, if the thickness exceeds 500 µm, since the density of the electrode cannot be increased the energy density of the electrode likewise decreases, and the DC internal resistance of the electric double layer capacitor increases. The values of the electrode thickness given here were obtained by measuring it using a dial thickness gauge "SM-528" manufactured by Teclock Co., Ltd., without applying any load other than the instrument's spring load.

Generally, the electric double layer capacitor is used by combining current collectors with it in integral fashion. Various kinds of sheet materials, including a metallic sheet of aluminum, titanium, stainless steel, or the like, and a non-metallic sheet such as a conductive polymer film, a conductive-filler-containing plastic film, or the like, can be used for the current collectors. The sheet-like current collectors may each be formed so as to contain pores in a portion thereof or over the entire surface thereof. When combining the sheet-like electrode with the sheet-like current collector in an integral fashion, they can function as the electrode and current collector by simply attaching one to the other under pressure; however, to reduce the contact resistance between them, they may be bonded together by using a conductive paint as a bonding material, or by applying a conductive paint over the electrode or the current collector and bonding them together under pressure after drying. When fabricating the electrode using the coating method, the formation of the electrode is accomplished simultaneously with the bonding to the current collector.

The electric double layer capacitor has a structure in which the pair of polarizable electrodes as the anode and cathode are disposed opposite each other with a separator interposed therebetween. An insulating material, such as microporous paper or glass or a porous plastic film of polyethylene, polypropylene, polyimide, polytetrafluoroethylene, or the like, can be used for the separator. The separator thickness is generally in the range of about 10 to 100 µm. The separate may be formed by laminating two or more insulating layers one on top of another.

The electric field activation can be performed by applying a voltage higher than the rated voltage and using a relatively small amount of electric current. For the electric field activation method, refer to the prior art method (Japanese Unexamined Patent Publication No. 2000-100668).

During the electric field activation, the graphite-like carbon material expands predominantly in the voltage application direction due to the current collectors. As a result, even when the capacitance of the electric double layer capacitor is increased, the capacitance per unit volume (volumetric capacitance density) decreases as the electrodes expand. Accordingly, if the increase of the capacitance is to provide a practical benefit, it is preferable to minimize the increase of the volume of the electric double layer capacitor caused by the expansion of the graphite-like carbon material. To suppress the increase in the volume of the electric double layer capacitor, a pressure that resists the pressure (expansion pressure) produced by the expansion of the graphite-like carbon material should be applied externally to the electrodes. For example, by externally applying a pressure of 0.1 to 30 MPa to the electrodes during the charging, the volumetric capacitance density can be effectively increased. However, if the expansion of the electrodes is completely suppressed, the electrolyte ions may not be sufficiently inserted into the crystal interlayer spacing of the graphite-like carbon material, reducing the effect of increasing the capacitance; therefore, it is preferable to set the external pressure so as to allow an expansion of about 5 to 100% to occur.

After performing the electric field activation once, it is preferable to perform the electric field activation once again by reversing the polarity of the anode and cathode, because then the crystal interlayer spacing of the graphite-like carbon material in both electrodes is enlarged up to the size that matches the cation (whose ion diameter is larger than the anion) and, as a result, the specific surface area increases and the movement of the electrolyte ions is facilitated, achieving a higher capacitance and a lower DC internal resistance.

### WORKING EXAMPLES

The present invention will be described in detail below with reference to working examples.

### Working example 1

Five hundred grams of a petroleum pitch-based carbon material was milled by a milling machine to produce a powdered material whose D50 was 20 µm, and the powdered material was calcined at 800°C in an inert atmosphere to obtain a carbonized material. Potassium hydroxide whose mass ratio to the carbonized material was 2 was mixed with it, and the mixture was activated through heat treatment at 700°C in an inert atmosphere. After that, the mixture was cooled to room temperature, rinsed with water to remove alkali content, and then dried. The thus prepared graphite-like carbon material had a BET specific surface area of 50 m²/g, and the interlayer spacing d₀₀₂ of the microcrystalline carbon as measured by an X-ray diffraction method was 0.355 nm. Ethanol was added to a mixture consisting of 85% by mass of the graphite-like carbon material, 5% by mass of Ketjen black powder as a conductive agent ("EC600JD" manufactured by Ketjen Black International Co., Ltd), and 10% by mass of polytetrafluoroethylene powder as a binder ("TEFLON (registered trademark) 6J" manufactured by Mitsui DuPont Fluorochemicals Co., Ltd.), and the resulting mixture was kneaded and then rolled-down five times to produce a polarizable sheet of a width of 100 mm and a thickness of 200 µm. A high-purity etched aluminum foil of a width of 150 mm and a thickness of 50 µm ("C512" manufactured by KDK Corporation) was used as a current collector, and a conductive adhesive liquid ("GA-37" manufactured by Hitachi Powdered Metals Co., Ltd.) was applied over both surfaces of the current collector; then, the electrode was placed over the current collector, and the electrode and the current collector were laminated together by passing them through compression rolls, to obtain a laminated sheet with the contacting faces bonded together. The laminated sheet was then placed in an oven whose temperature was controlled to 150°C, and the sheet was held therein for 10 minutes to remove the dispersion medium by evaporation from the conductive adhesive liquid layers, thereby obtaining a polarizable electrode.

This laminated sheet was diecut to form a rectangular-shaped polarizable electrode with its carbon electrode portion measuring 3 cm square and its lead portion (the portion where the current collector is not covered with the polarizable electrode) measuring 1 × 5 cm, as shown in Figure 1. Two such polarizable electrodes were set up as an anode and a cathode, respectively, and a 80-µm thick, 3.5-cm square hydrophilized ePTFE sheet ("BSP0708070-2" manufactured by Japan Gore-Tex Inc.) was inserted as a separator between them; then, the electrodes and the separator were placed between two aluminum laminated sheets ("PET12/A120/PET12/CPP30 dry laminated sheets manufactured by Showa Denko Packaging Co., Ltd.), and three sides including the lead portion side were heat-sealed to produce an aluminum pack cell. Here, an end of the lead portion was brought outside the aluminum pack cell so that the lead portion and the aluminum pack cell were sealed together when the lead portion and the aluminum laminated sheets were heat-sealed. Next, the aluminum pack cell was vacuum dried at 150°C for 24 hours, after which the cell was introduced into a glove box where a dew point of -60°C or less was maintained in an argon atmosphere; then, with the open end (the side not sealed) facing up, 4mL of a propylene carbonate solution containing 1.5 mol/L of 1,1'-spirobipyrrolidinium tetrafluoroborate was injected as the electrolytic solution into the aluminum pack, and the aluminum pack cell was left stationary at a reduced pressure of -0.05 MPa for 10 minutes, allowing the gasses contained in the electrodes to be replaced with the electrolytic solution. Finally, the open end of the aluminum pack was sealed by heat-sealing, to produce a single laminated type electric double layer capacitor. The expected operating voltage of this capacitor was 3.0 to 3.5 V. This electric double layer capacitor was stored at 40°C for 24 hours, thus aging the electrolytic solution including the solution impregnated into the electrodes. After that, a compression pressure of 0.2 MPa was applied from both sides of the capacitor; this capacitor is designated as the capacitor of Working example 1. Working example 2

A capacitor was fabricated in the same manner as in Working example 1, except that a propylene carbonate solution containing 1.5 mol/L of 1,1'-spirobipiperidinium (six-membered ring structure) tetrafluoroborate was used as the electrolytic solution.

### Comparative example 1

A capacitor was fabricated in the same manner as in Working example 1, except that a propylene carbonate solution containing 1.5 mol/L of triethylmethylammonium tetrafluoroborate was used as the electrolytic solution.

### Comparative example 2

A capacitor was fabricated in the same manner as in Working example 1, except that a propylene carbonate solution containing 1.5 mol/L of 1,3-dimethylimidazolium tetrafluoroborate was used as the electrolytic solution.

### Comparative example 3

A capacitor was fabricated in the same manner as in Working example 1, except that a propylene carbonate solution containing N,N-diethylpyrrolidinium tetrafluoroborate was used as the electrolytic solution.

### Comparative example 4

A capacitor was fabricated in the same manner as in Working example 1, except that activated carbon with a specific surface area of 1600 m²/g ("YP-17" manufactured by Kuraray Chemical) was used as the carbon material.

### Comparative example 5

A capacitor was fabricated in the same manner as in Working example 1, except that activated carbon with a specific surface area of 1600 m²/g, the same one as that used in Comparative example 4, was used as the carbon material, and also that a propylene carbonate solution containing 1.5 mol/L of triethylmethylammonium tetrafluoroborate was used as the electrolytic solution.

**Table 1**

| | Specific surface area [m²/g] | Electrolyte cation |
|---|---|---|
| Working example 1 | 50 | 1,1'-spirobipyrrolidinium (five-membered ring) |
| Working example 2 | 50 | 1,1'-spirobipiperidinium (six-membered ring) |
| Comparative example 1 | 50 | triethylmethylammonium |
| Comparative example 2 | 50 | 1,3-dimethylimidazolium |
| Comparative example 3 | 50 | N,N-diethylpyrrolidinium |
| Comparative example 4 | 1600 | 1,1'-spirobipyrrolidinium (five-membered ring) |
| Comparative example 5 | 1600 | triethylmethylammonium |

| | | |
|---|---|---|
| Test 1 (Performance comparison under identical conditions) | | |

The capacitor cells of Working examples 1 and 2 and Comparative examples 1 to 5 fabricated as described above were tested under the following conditions, and the volumetric capacitance density, DC internal resistance, and leakage current (end-of-charge current) were measured on each sample at the end of the 20th power-up cycle.

Conditions for the first cycle of electric field activation and 20 power-up cycles

### (Electric field activation)

Charge: 1 mA/cm², 4.0 V, 6 hours
Discharge: 1 mA/cm², 0 V
Temperature: 25°C
Cycle: 1

### (Power-up)

Charge: 5 mA/cm², 3.0 V, 30 minutes
Discharge: 5 mA/cm², 0 V
Temperature: 25°C
Cycle: 20

For Comparative example 4 and 5, only the power-up test was performed, because application of a high voltage would cause electrolysis. The results of the measurements are shown in Table 2 below.

### Test 2 (Performance comparison in terms of withstand voltage)

After completion of Test 1, each cell was subjected to one cycle of charge/discharge testing while increasing the charge voltage from 2.7 V up to 4.0 V in increments of 0.1 V, and the voltage (withstand voltage) at which the leakage current became 5 mA was measured. The results of the measurements are shown in Table 3 below. In Table 3, the volumetric capacitance density and the energy density represent values obtained when the withstand voltage was applied.

### (Volumetric capacitance density)

The capacitance was obtained by an energy conversion method, and the volumetric capacitance density was calculated by dividing the obtained value by the volume of the anode and cathode carbon electrode portions, excluding the current collectors, before the expansion.

### (DC internal resistance)

A discharge curve from the start of the discharge to 10% of the total discharge time was approximated by a straight line, and the DC internal resistance at the start of the discharge was calculated.

### (Leakage current)

Leakage current represents the electric current (end-of-charge current) needed to maintain the charge voltage at the end of the charge.

### (Equipment)

Charge/discharge test equipment: "CDT-5R2-4" manufactured by Power Systems Co., Ltd.

Analysis software: "CDT Utility Ver. 2.02" produced by Power Systems Co., Ltd.

**Table 2**

| | Volumetric capacitance density [F/cm³] | Energy density [Wh/kg] | DC internal resistance [Ohms] | Leakage current [mA] |
|---|---|---|---|---|
| Working example 1 | 35 | 44 | 1.3 | 5 |
| Working example 2 | 34 | 43 | 1.4 | 5 |
| Comparative example 1 | 29 | 36 | 2.3 | 5 |
| Comparative example 2 | 33 | 41 | 7.0 | 20 |
| Comparative example 3 | 30 | 38 | 1.7 | 5 |
| Comparative example 4 | 16 | 28 | 0.75 | 8 |
| Comparative example 5 | 15 | 27 | 0.90 | 8 |

**Table 3**

| | Withstand voltage [V] | Volumetric capacitance density [F/cm³] | Energy density [Wh/kg] |
|---|---|---|---|
| Working example 1 | 3.5 | 39 | 66 |
| Working example 2 | 3.5 | 38 | 64 |
| Comparative example 1 | 3.5 | 30 | 51 |
| Comparative example 2 | 3.0 | 33 | 41 |
| Comparative example 3 | 3.3 | 32 | 48 |
| Comparative example 4 | 2.7 | 16 | 23 |
| Comparative example 5 | 2.7 | 15 | 22 |

As can be seen from Tables 2 and 3, the capacitor cell of the present invention has distinct advantages over the capacitor cells of the comparative examples in that high energy density, low DC internal resistance, and high withstand voltage can be simultaneously achieved.
In particular, when a comparison is made between Working example 1 or 2 and Comparative example 1, it can be seen that the electrolyte containing the spiro compound according to the present invention is easier to insert into the crystal interlayer spacing of the graphite-like carbon material during the electric field activation than the conventional quaternary ammonium salt-based electrolyte, because the volumetric capacitance density is higher by more than 17%. It can also be seen that the DC internal resistance of the capacitor of the working example is about 40% lower, because the conductivity of the electrolyte itself is higher. From Comparative example 2, one can see that, since 1,3-dimethylimidazolium decomposes under the conditions of Test 1, and both the DC internal resistance and the leakage current significantly increase, the operating voltage cannot be raised and, as a result, the energy density decreases. When a comparison is made between Working example 1 and Comparative example 3, one can see that while the kind and the number of atoms constituting the electrolyte are substantially the same between the two samples, the capacitor of Working sample 1 achieves higher volumetric capacitance density and higher energy density, which shows that the electric field activation is promoted because the two ring structures are linked by a spiro atom. Comparative examples 4 and 5 show that if the electrolyte containing the spiro compound according to the present invention is used in combination with the activated carbon-based electrodes, there is no substantial improvement in volumetric capacitance density over the conventional quaternary ammonium salt-based electrolyte. This means that the electrolyte containing the spiro compound achieves the advantageous effect of improving the volumetric capacitance density only when it is used in combination with the graphite-like carbon material. From a comparison between Working examples 1 and 2, it can be said that 1,1'-spirobipyrrolidinium (five-membered ring) achieves somewhat better performance than 1,1'-spirobipiperidinium (six-membered ring) in terms of both volumetric capacitance density and DC internal resistance.

The crystal interlayer spacing d₀₀₂ of the carbon material contained in the cathode onto which electrolyte cations were adsorbed was measured on each of the samples of Working example 1 and Comparative examples 1 and 2 before and after Test 1. More specifically, two capacitor cells were fabricated for each sample; then, one was disassembled before the test (after aging of the electrolytic solution) and the other after the test, and the cathode was cleaned in propylene carbonate. Next, the cathode was heated at 250°C for 12 hours and, after separating the carbon material sheet from the aluminum foil current collector, the carbon material sheet was heated at 400°C for three hours in a nitrogen atmosphere to decompose the PTFE binder, and the carbon material sheet was reduced to powder. The crystal interlayer spacing d₀₀₂ of the powdered carbon material was measured by an X-ray diffraction method; the results of the measurements are shown in Table 4.

**Table 4**

| Results of measurements of interlayer spacing (d₀₀₂) by X-ray diffraction method | | |
|---|---|---|
| | Before test | After test |
| Working example 1 | 0.355 nm | 0.392 nm |
| Comparative example 1 | 0.355 nm | 0.386 nm |
| Comparative example 2 | 0.355 nm | 0.388 nm |

As can be seen from Table 4, 1,1'-spirobipyrrolidinium ions (Working example 1) exerts a greater force for expanding the crystal interlayer spacing of the carbon material than triethylmethylammonium ions (Comparative example 1) or 1,3-dimethylimidazolium ions (Comparative example 2) do, and it is presumed that this fact is related to the high volumetric capacitance density achieved by the present invention.

### INDUSTRIAL APPLICABILITY

According to the present invention, since the polarizable electrodes containing the graphite-like carbon material are used in combination with the electrolyte containing the spiro compound represented by the earlier given general formula (1), the volumetric capacitance density (energy density), resistance value, and withstand voltage of the electric field activation type electric double layer capacitor simultaneously improve, and the electrode performance of the graphite-like carbon material can be fully utilized.

## Claims

1. An electric double layer capacitor comprising:
a polarizable electrode containing a carbon material having graphite-like microcrystalline carbon; and an electrolyte containing a spiro compound represented by the general formula 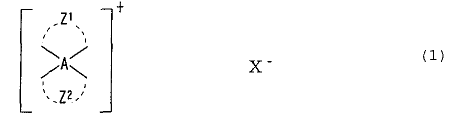 (where A represents a spiro atom having an sp³ hybrid orbital, Z¹ and Z² each represent a group of atoms forming a saturated ring or unsaturated ring in which the number of ring atoms including A is four or more, and X⁻ represents a counter-anion).

2. An electric double layer capacitor as claimed in claim 1, wherein said spiro atom carries a positive charge in said electrolyte.

3. An electric double layer capacitor as claimed in claim 2, wherein said spiro atom is nitrogen.

4. An electric double layer capacitor as claimed in any one of claims 1 to 3, wherein the number of ring atoms is the same for both Z¹ and Z².

5. An electric double layer capacitor as claimed in claim 4, wherein the number of ring atoms is five in each of Z¹ and Z².

6. An electric double layer capacitor as claimed in claim 4 or 5, wherein Z¹ and Z² have the same ring structure.

7. An electric double layer capacitor as claimed in claim 1, wherein said spiro compound is 1,1'-spirobipyrrolidinium.

8. An electric double layer capacitor as claimed in any one of claims 1 to 7, wherein said carbon material having graphite-like microcrystalline carbon has a specific surface area not larger than 800 m²/g as measured by a BET single-point method before charging, and an interlayer spacing d₀₀₂ lying within a range of 0.350 to 0.385 nm as measured by an X-ray diffraction method.
